# EUROPÄISCHE PATENTSCHRIFT

(11) **EP 4 324 313 B1**
(45) Veröffentlichungstag und Bekanntmachung des Hinweises auf die Patenterteilung: **14.05.2025**
(21) Anmeldenummer: 23401028.8
(22) Anmeldetag: 16.08.2023
(51) Int. Cl.: A01B 39/18, A01B 76/00, A01M 21/00, G06V 20/10

(54) **SPROSSACHSENERFASSUNG**
SPROUT AXIS CAPTURING
SAISIE DE L'AXE DES POUSSES

(30) Priorität: 16.08.2022 DE 102022120704
(43) Veröffentlichungstag der Anmeldung: 21.02.2024
(73) Patentinhaber: Zauberzeug GmbH, 48329 Havixbeck (DE)
(72) Erfinder: Trappe, Rodja, 48155 Münster (DE)
(74) Vertreter: Euscher, Christoph

(56) Entgegenhaltungen:
- EP-A1- 0 502 789
- WO-A1-2016/191825
- WO-A1-2017/135809
- US-A- 5 560 190
- US-A1- 2017 238 460

## Beschreibung

Die Erfindung betrifft eine Vorrichtung sowie ein Verfahren zur Erfassung der Sprossachsen von Pflanzen, insbesondere zur Beikrautregulierung.

### Stand der Technik

Für eine Vielzahl von Anwendungsfällen müssen Pflanzen inspiziert werden. Z.B. für die Bonitur zur qualitativen Beurteilung von Agrarflächen oder die zielgerichtete Beikrautregulierung. Besonders bei Pflanzen in späteren Wachstumsphasen ist von oben nur das äußere Blattwerk zu erkennen. Um die Sprossachse, d.h. den Stängel, den Halm, oder den Stamm, und insbesondere das Hypokotyl, d.h. den Teil zwischen Wurzel und ersten Verzweigungen zu erfassen, kann der Mensch bei der manuellen Inspektion leicht mit Händen oder Werkzeugen das Blattwerk aus der Sicht drücken. Für eine Automatisierung fehlt bisher eine kostengünstige und zuverlässige Technik, um mit einem Sensor unter das Blattwerk zu kommen.

Bisher werden Roboter bei der Unkrautregulierung daher in einem sehr frühen Wachstumsstadium und während diesem dann wiederholt auf derselben Fläche eingesetzt. In einem frühen Wachstumsstadium sind die Pflanzen noch nicht so groß, dass die Blätter die Sprossachsen verdecken. Von Nachteil dabei aber ist, dass die Pflanzen klein gehalten werden müssen und die Fahrten zudem zeitlich an die Aussaat gekoppelt sind.

Alternativ besteht die Möglichkeit, den Sensor selbst unter oder in das Blattwerk zu führen. Diese Möglichkeit aber birgt den Nachteil, dass ein von dem Sensor, also beispielsweise einer Kamera, erfassbare Bildausschnitt aufgrund der geringen Distanz zum Objekt sehr klein wird. Zudem besteht die Gefahr, dass der Sensor durch den Kontakt zu dem Blattwerk verschmutzt wird.

Desweiteren kann das Blattwerk, eine entsprechende menschliche Bewegung imitierend, durch steuerbare Roboterarme oder dergleichen zur Seite gebogen werden. Diese Variante aber erfordert eine kostenintensive Hardware sowie eine aufwändige Steuerung.

Weiterhin besteht die Möglichkeit, mittels intelligenter Auswertesoftware und/oder speziellen, auch nicht-optischen Sensoren wie zum Beispiel Ultraschall oder Radartechnik durch das Blattwerk auf die darunter liegenden Strukturen zu schließen. Nachteilig dabei aber ist, dass das Verfahren nur eine indirekte Erfassung ermöglicht und fehleranfällig ist.

WO 2017/135809 A1 zeigt ein Verfahren und eine Vorrichtung zum Ernten von Brokkoli und anderen Kohlarten, wobei die Sprossachsen in Form des zentralen Teils der Pflanze erfasst werden. Die Vorrichtung umfasst ein autonomes Roboterfahrzeug, sowie eine Sensoreinrichtung. Das Fahrzeug weist des Weiteren ein Hindernis auf, dessen Höhe über der Bodenebene derart positionierbar ist, dass bei einer Bewegung des Fahrzeugs über einen mit Pflanzen bewachsenen Bereich in eine Erfassungsrichtung die Blätter der Pflanzen um die Sprossachsen herum nach unten gebogen werden, und die Sensoreinrichtung derart in einer erhöhten Position angeordnet und eingerichtet ist, den Bereich um das Hindernis herum zu erfassen.

US 2017/238460A1 zeigt ein autonomes Fahrzeug zur Beikrautregulierung, das ein Hindernis sowie eine Sensoreinrichtung aufweist. Sobald das Fahrzeug mit dem Fahrzeug auf eine Pflanze trifft, weicht es dieser aus und biegt sie nicht in die Erfassungsrichtung um.

### Offenbarung der Erfindung

Aufgabe der vorliegenden Erfindung ist die Angabe einer einfachen und verbesserten Möglichkeit, die Sprossachsen von Pflanzen, insbesondere zur Beikrautregulierung, automatisch erfassen und ggf. im Anschluss erkennen zu können.

Die Lösung der Aufgabe erfolgt erfindungsgemäß durch die Merkmale der unabhängigen Ansprüche. Vorteilhafte Ausgestaltungen der Erfindung sind in den Unteransprüchen angegeben.

Erfindungsgemäß vorgesehen ist ein Verfahren zum insbesondere automatisierten Erfassen von Sprossachsen, wobei ein Hindernis, beispielsweise eine dünne Stange, von einem Fahrzeug, insbesondere von einem autonomen Roboterfahrzeug, vorzugsweise quer und vorzugsweise parallel zur Bodenebene über einen mit Pflanzen bewachsenen Bereich bewegt wird,
wobei die Höhe des Hindernisses über der Bodenebene so gewählt ist, dass bei einer Fahrt in Erfassungsrichtung, beispielsweise in Vorwärtsrichtung, die Sprossachsen der Pflanzen mit ihren Blättern in die Erfassungsrichtung, beispielsweise nach vorne, gebogen werden, und eine Sensoreinrichtung von einer vorzugsweise erhöhten Position aus einen von dem Hindernis freigelegten Bereich um das Hindernis herum erfasst.

Dabei handelt es sich bei dem um das Hindernis herum erfassten Bereich um einen Bereich, welcher durch ein Biegen der Sprossachsen der Pflanzen in die Erfassungsrichtung freigelegt ist.

Das erfindungsgemäße Verfahren bietet den Vorteil, dass durch die gewählte Position des Hindernisses eine Fahrt in Erfassungsrichtung, was in der Regel der Vorwärtsfahrt entspricht, automatisch zur Freilegung der Sprossachsen führt.

Eine vorteilhaft gewählte Position der Sensoreinrichtung bietet direkte Einsicht auf die durch das Hindernis freigelegten Sprossachsen. Vorteilhaft kann die Sensoreinrichtung beispielsweise in Erfassungsrichtung hinter und oberhalb von dem Hindernis positioniert sein.

Dabei ist bei einer relativen Positionsangabe der Sensoreinrichtung im Bezug zum Hindernis die Position einer für das Verfahren wirksamen Kante des Hindernisses zu verstehen. Dabei ist unter der wirksamen Kante des Hindernisses derjenige Teil des Hindernisses zu verstehen, welcher sich im Kontakt zur Pflanze befindet und durch den die Pflanze gebogen wird.

Ist das Hindernis als dünne Stange ausgeführt, so bietet dies den Vorteil, dass der von dem Hindernis verdeckte Bereich der Pflanze relativ klein ist und die Pflanze sowohl vor als auch hinter dem Hindernis zugleich erfassbar ist. Die Sensoreinrichtung ist vorteilhaft derart ausgerichtet, dass sie sowohl einen Bereich vor als auch hinter der dünnen Stange erfasst.

In einem nachfolgendem Verfahrensschritt können die von der Sensoreinrichtung erfassten Sprossachsen von einem Detektionssystem zur Erkennung von Beikraut analysiert werden.

Das Verfahren ist auf die Robustheit der Pflanzen angewiesen, denn diese müssen sich nach der Inspektion wieder aufrichten und erholen. Es ist daher eher für Feldfrüchte als für Stauden und Rankpflanzen, d.h. Tomaten, Wein, etc. geeignet.

Vorgesehen ist zudem eine Vorrichtung, die eingerichtet ist, das vorbeschriebene Verfahren auszuführen.

Vorgesehen ist eine Vorrichtung zum insbesondere automatisierten Erfassen von Sprossachsen, wobei die Vorrichtung ein Fahrzeug, insbesondere ein autonomes Roboterfahrzeug, sowie eine Sensoreinrichtung umfasst, und wobei das Fahrzeug ein Hindernis, vorzugsweise eine dünne Stange, aufweist, dessen Höhe über der Bodenebene derart positionierbar ist, dass bei einer Bewegung des Fahrzeugs über einen mit Pflanzen bewachsenen Bereich in eine Erfassungsrichtung, beispielsweise in einer Vorwärtsrichtung, die Sprossachsen der Pflanzen mit ihren Blättern in die Erfassungsrichtung, beispielsweise nach vorne, gebogen werden, und wobei die Sensoreinrichtung derart, vorzugsweise in einer erhöhten Position, angeordnet und eingerichtet ist, einen Bereich um das Hindernis herum zu erfassen, bzw. dass durch die Sensoreinrichtung der Bereich um das Hindernis herum erfassbar ist.

In einer vorteilhaften Ausgestaltung weist die Vorrichtung ein Detektionssystem auf, welches eingerichtet ist, die erfassten Sprossachsen zur Erkennung von Beikraut zu analysieren.

Eine derartige Vorrichtung ist vorteilhaft geeignet, das vorbeschriebene Verfahren auszuführen.

Im Weiteren kann die Vorrichtung die nachfolgend beschriebenen Merkmale aufweisen, mit Hilfe derer zugleich die Durchführung des vorbeschriebenen Verfahrens in Ergänzung entsprechender Verfahrensschritte weiter ausgestaltet werden kann.

In einer vorteilhaften Ausgestaltung kann die Vorrichtung eine Beleuchtungseinheit aufweisen. Diese kann beispielsweise ausgeführt sein, auf den zu erfassenden Bereich heller als das Sonnenlicht zu wirken. Damit könnte unabhängig von umwelt- und/oder wetterbedingtem Lichteinfall eine gleichmäßige und gerichtete Beleuchtung der Pflanzen und insbesondere der Sprossachsen bewirkt werden.

Alternativ und/oder ergänzend kann die Vorrichtung zum Erfassen von Sprossachsen ausgeführt sein, den Bereich um das Hindernis in einem lichtkontrollierten Raum zu erfassen.

Dazu weist die Vorrichtung vorteilhaft eine Abschirmung auf, die ausgeführt ist, sowohl den Bereich um das Hindernis, nachfolgend auch als Erfassungsbereich bezeichnet, als auch die Erfassungsvorrichtung optisch abzuschirmen.

Vorteilhaft würde eine derartige Abschirmung bis auf den Boden herabreichen, um eine möglichst wirksame Abschirmung zu erzielen. Einer derartigen Ausgestaltung steht allerdings der Umstand entgegen, dass sich das Fahrzeug über einen mit Pflanzen bewachsenen Bereich bewegen können muss.

In einer vorteilhaften Ausgestaltung der Vorrichtung weist diese eine bis auf einen Mindestabstand über den Boden reichende Abschirmung auf, welche auf einer Seite in Erfassungsrichtung sowie auf einer Seite entgegen der Erfassungsrichtung je eine Ausnehmung aufweist. Diese Ausnehmung erlaubt es, dass das Fahrzeug über einen mit Pflanzen bewachsenen Bereich bewegt werden kann, ohne dass die Pflanzen Schaden nehmen. Ein sinnvolles Maß für den Mindestabstand, welcher ein Aufsetzen der Abschirmung auf den Boden verhindern soll, ist von der Höhe erwarteter Terrain-Unebenheiten wie Mulden oder Steinen abhängig. Ein sinnvoller Wert für den Mindestabstand liegt zwischen 5 Zentimetern und 20 Zentimetern, insbesondere bei 12 Zentimetern. Dies könnte beispielsweise in etwa dem Radius eines Antriebsrades des Fahrzeugs entsprechen.

Um die Wirkung eines durch die Ausnehmungen erfolgenden Lichteinfalls zu reduzieren, können die Ausnehmungen zum Erfassungsbereich, insbesondere zu dem Hindernis, in und/oder entgegen der Erfassungsrichtung in einem Abstand angeordnet sein, welcher in etwa der Höhe der Ausnehmung über dem Boden entspricht. Weiterhin kann die Vorrichtung zu dem Zweck, dien Lichteinfall weiter zu reduzieren, beispielsweise vor den Ausnehmungen der Abschirmung, einen Vorhang oder eine Schürze aufweisen.

Das Fahrzeug kann beispielsweise einen über Räder geführten Ketten-/ Raupenantrieb, oder einen Radantrieb aufweisen. In einer vorteilhaften Ausgestaltung erstreckt sich die Abschirmung bis etwa auf die Höhe der Radachsen. Der Erfassungsbereich kann vorteilhaft zwischen einem Ketten-/Raupenantrieb, bzw. zwischen den entsprechenden Rädern angeordnet sein.

Abgesehen von den vorbeschriebenen Ausnehmungen kann sich die Abdeckung des Fahrzeugs vorteilhaft ringsum im Wesentlichen gleichsam nach unten erstrecken.

Das Fahrzeug kann vorteilhaft eine Abschirmung aufweisen, welche die Antriebsräder oder einen Ketten-/ Raupenantrieb des Fahrzeugs seitlich zumindest teilweise, vorteilhaft zumindest bis etwa zur Höhe der Radachse umschließt. Neben dem Vorteil einer guten Abschirmung weist eine Vorrichtung mit diesem Merkmal den Vorteil auf, dass es einen Schutz, beispielsweise einen Kettenschutz, ausbildet, und somit eine Betriebssicherheit des Fahrzeugs verbessert.

Einzeln sowie gemeinsam weisen diese Merkmale den Vorteil auf, den Erfassungsbereich der Vorrichtung gut gegen Fremdlicht abschirmen zu können.

Die vorbeschriebene Beleuchtungseinrichtung kann vorteilhaft innerhalb der Abschirmung angeordnet sein. Vorteilhaft kann diese eine Lichtintensität aufweisen, welche eine Beleuchtung der zu erfassenden Bereiches bewirkt, gegenüber der die Wirkung von einfallendem Restlicht vernachlässigbar ist, oder eingerichtet sein, die Beleuchtung innerhalb der Abschirmung in Abhängigkeit von der Intensität einfallenden Restlichts zu regulieren, um einen lichtkontrollierten Raum mit möglichst konstanten Lichtverhältnissen zu erzielen.

Vorteilhaft bildet die Abschirmung zugleich ein Außengehäuse der Vorrichtung aus. Dieses kann sowohl die Einrichtungen im Inneren gegen die Wettereinflüsse, als auch Menschen oder Tiere vor den beweglichen Komponenten der Vorrichtung schützen.

Grundsätzlich könnte das Hindernis durch eine Achse des Antriebs ausgebildet sein. In einer vorteilhaften Ausgestaltung jedoch ist das Hindernis in einer Höhe über den Boden verstellbar ausgeführt, um auf eine aktuell vorherrschenden Wuchshöhe der Pflanzen einstellbar zu sein.

In einer vorteilhaften Ausgestaltung der Vorrichtung kann eine Höhe des Hindernisses über dem Boden adaptiv einstellbar ausgeführt sein. Die Einstellung kann adaptiv von der Höhe des Hindernisses über dem Boden und/oder von der Wachstumshöhe der Pflanzen erfolgen. Eine adaptive, und insbesondere eine automatische adaptive und/oder nachführbare Einstellbarkeit auf eine möglichst konstante Höhe über dem Boden ermöglicht es, lokalen Absenkungen oder Aufwürfen des Bodens, beispielsweise auch zwischen den Spuren des Fahrzeugs, zu folgen. Es kann beispielsweise das Bodenniveau einer Standfläche der Vorrichtung ein anderes sein als das Bodenniveau der Pflanzenfläche. Dies ist beispielsweise bei Dammkulturen der Fall, bei welchen die Pflanzen oberhalb einer Standfläche der Vorrichtung auf einem Damm wachsen. In Abhängigkeit von der Höhe des Damms kann die Höhe des Hindernisses relativ zur Höhe der Vorrichtung über der Standfläche, aber konstant zu einer Höhe über dem Bodenniveau der Pflanzen automatisch einstellbar bzw. automatisch nachführbar ausgeführt sein.

Für eine Ausrichtung des Abstands über den Boden kann die Vorrichtung einen Nahbereichssensor, beispielsweise einen Ultraschallsensor, aufweisen. Vorteilhaft kann der Sensor derart ausgeführt sein, dass die Messergebnisse des Sensors nicht von einem Pflanzenbewuchs verfälscht werden. Dazu kann er beispielsweise auf einer Technologie basieren, die pflanzliches Material von nichtpflanzlichem Material differenzieren kann. In einer Ausführungsvariante kann der Sensor als Radarsensor ausgeführt sein, welcher den Vorteil aufweist, dass das Pflanzenmaterial von einem Radarsignal durchdrungen werden kann. Ebenso kann aber auch eine optische Erfassungsvorrichtung, beispielsweise eine Kamera, in Verbindung mit einer entsprechenden Bildverarbeitungseinrichtung ausgeführt sein, den Abstand zu ermitteln.

In einer vorteilhaften Ausgestaltung der Erfindung erfolgt die Ermittlung des Abstands des Hindernisses zum Boden sowie die Erfassung des Erfassungsbereiches mit derselben Sensoreinrichtung und einer damit verbunden Bildverarbeitungseinrichtung.

Das Hindernis kann über seine gesamte Breite dieselbe Höhe gegenüber dem Boden aufweisen. Dies ist vorzugsweise und beispielsweise dann der Fall, wenn das Hindernis als starre Stange ausgeführt ist. Diese kann sich beispielsweise über den Großteil einer Spurbreite des Fahrzeugs erstrecken.

Alternativ kann das Hindernis aber auch verschiedene Abschnitte aufweisen, welche abschnittsweise unterschiedlich in ihrer Höhe verstellbar sind. Dies kann beispielsweise dann von Vorteil sein, wenn eine Dammkultur mit trapezförmigem Querschnitt bearbeitet werden soll. In diesem Fall könnten die Abschnitte eines mehrteiligen Hindernisses auf die verschiedenen Höhen der Flanken sowie des Mittelbaus eingestellt werden.

### Zeichnungen

Nachfolgend wird die Erfindung unter Bezugnahme auf die anliegenden, schematischen Zeichnungen anhand bevorzugter Ausführungsformen näher erläutert.

Es zeigen
- Fig. 1: ein erstes von einer erfindungsgemäßen Vorrichtung erfasstes schematisches Bild mit Sicht auf die Sprossachse einer Nutzpflanze;
- Fig. 2: ein zweites von einer erfindungsgemäßen Vorrichtung erfasstes schematisches Bild mit Sicht auf die Sprossachsen von freigelegtem Beikraut;
- Fig. 3: eine Skizze eines Ausführungsbeispiels der erfindungsgemäßen Vorrichtung.

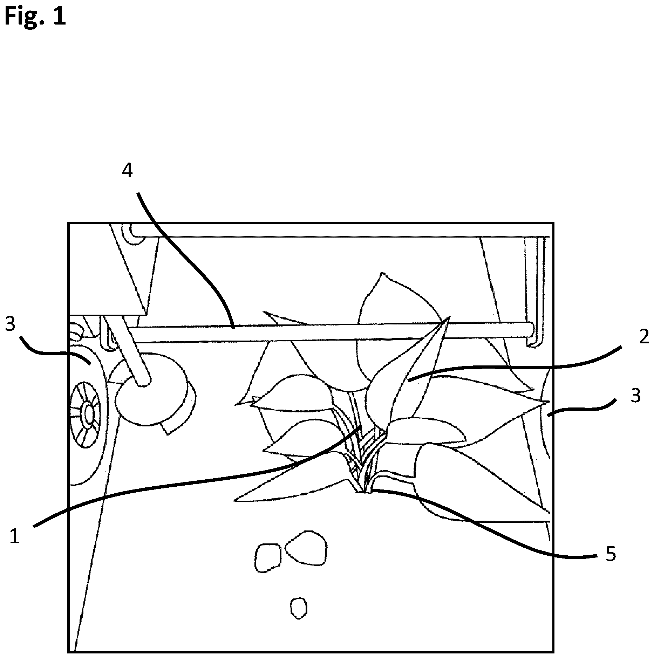

Fig. 1 zeigt ein erstes von einer erfindungsgemäßen Vorrichtung erfasstes Bild - beispielsweise nach einer Bildverarbeitung - mit Sicht auf die Sprossachse 1 einer Nutzpflanze 2.

Aus Fig. 1 ersichtlich ist ein von einer Vorrichtung zum automatisierten Erfassen von Sprossachsen 1 erfasstes Bild, wobei aus dem erfassten Bildbereich ersichtlich die Vorrichtung ein Fahrzeug mit Rädern 3, einer dünnen Stange 4 sowie implizit eine Sensoreinrichtung umfasst, welche das dargestellte Bild erfasst hat. Fig. 1 zeigt zugleich ein von einer erfindungsgemäßen Vorrichtung erfasstes Bild mit Sicht auf die Sprossachse 1 einer Nutzpflanze 2. Diese ist durch eine Vorwärtsrichtung des Fahrzeugs von der dünnen Stange 4 nach vorne gebogen worden, so dass das Hypokotyl 5 der Pflanze optisch erfassbar ist.

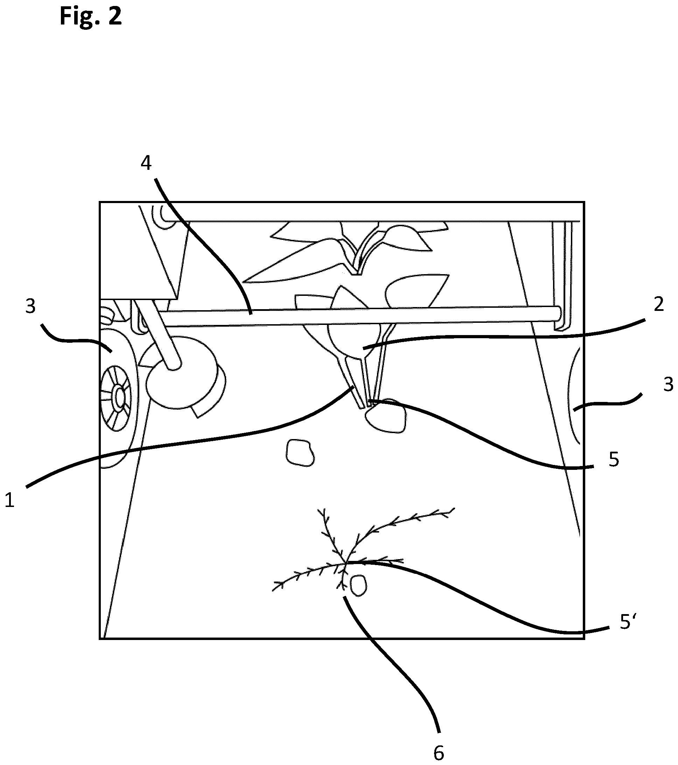

Fig. 2 zeigt ein zweites von einer erfindungsgemäßen Vorrichtung erfasstes Bild - beispielsweise nach einer Bildverarbeitung -, hier mit Sicht auf die Sprossachsen 1 einer Nutzpflanze 2 sowie von Beikraut 6. Wie aus Fig. 2 ersichtlich wird die Sprossachse 1 samt Blattwerk von der Nutzpflanze 2, hier einer Bohne, von der dünnen Stange 4 derart verbogen, dass das Hypokotyl 5' von freigelegtem Beikraut 6, hier einer Distel, erfassbar ist.

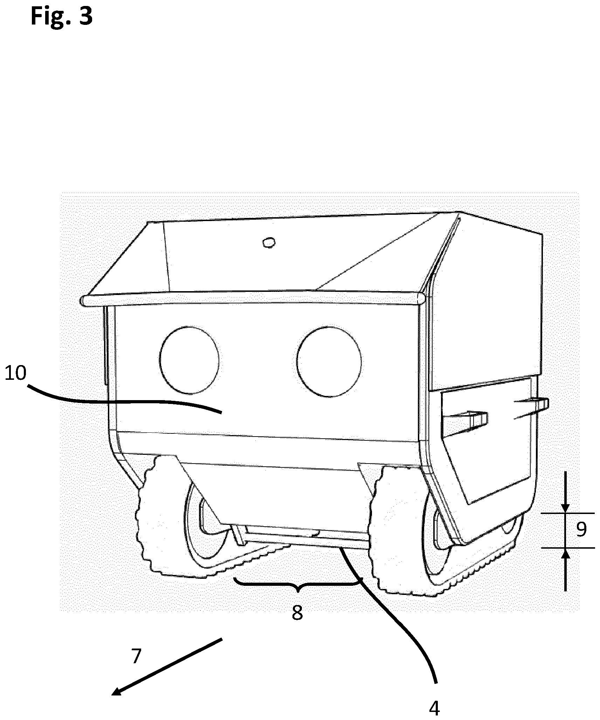

Fig. 3 zeigt eine Skizze eines Ausführungsbeispiels der erfindungsgemäßen Vorrichtung.

Aus Fig. 3 ist ein Ausführungsbeispiel der Vorrichtung ersichtlich, welches ausgeführt ist, den Bereich um das Hindernis 4 in einem lichtkontrollierten Raum zu erfassen. Die Vorrichtung weist eine Abschirmung 10 auf, die ausgeführt ist, sowohl den Bereich um das Hindernis 4, als auch die Sensoreinrichtung, hier nicht gezeigt und in einem oberen Bereich der Vorrichtung gelegen, abzuschirmen.

Die Abschirmung 10 der Vorrichtung reicht bis auf einen Mindestabstand 9 auf den Boden herab und weist auf einer Seite in Erfassungsrichtung 7 sowie, nicht sichtbar, auf einer gegenüber gelegenen Seite eine Ausnehmung 8 auf. Die Vorrichtung weist einen von Antriebsrädern 3 angetriebenen Raupenantrieb auf, welcher zumindest seitlich von der Abschirmung 10 teilweise umschlossen ist.

Die Abschirmung 10 formt zugleich ein Außengehäuse der Vorrichtung aus.

## Patentansprüche

1. Verfahren zum insbesondere automatisierten Erfassen von Sprossachsen (1), insbesondere zur Beikrautregulierung, wobei
ein Hindernis (4), beispielsweise eine dünne Stange, von einem Fahrzeug, insbesondere von einem autonomen Roboterfahrzeug, vorzugsweise quer und vorzugsweise parallel zur Bodenebene über einen mit Pflanzen bewachsenen Bereich bewegt wird,
wobei die Höhe des Hindernisses (4) über der Bodenebene so gewählt ist, dass bei einer Fahrt in Erfassungsrichtung (7), beispielsweise in Vorwärtsrichtung, die Sprossachsen (1) der Pflanzen mit ihren Blättern in die Erfassungsrichtung (7), beispielsweise nach vorne gebogen werden,
und eine Sensoreinrichtung von einer vorzugsweise erhöhten Position aus einen Bereich um das Hindernis (4) herum erfasst.

2. Verfahren nach Anspruch 1, **dadurch gekennzeichnet, dass** von der Sensoreinrichtung erfasste Sprossachsen (1) von einem Detektionssystem zur Erkennung von Beikraut (6) analysiert werden.

3. Vorrichtung zum insbesondere automatisierten Erfassen von Sprossachsen (1), wobei die Vorrichtung ein Fahrzeug, insbesondere ein autonomes Roboterfahrzeug, sowie eine Sensoreinrichtung umfasst,
wobei das Fahrzeug ein Hindernis (4), vorzugsweise eine dünne Stange, aufweist, dessen Höhe über der Bodenebene derart positionierbar ist, dass bei einer Bewegung des Fahrzeugs über einen mit Pflanzen bewachsenen Bereich in eine Erfassungsrichtung (7), beispielsweise in Vorwärtsrichtung, die Sprossachsen (1) der Pflanzen mit ihren Blättern in die Erfassungsrichtung (7), beispielsweise nach vorne, gebogen werden,
und die Sensoreinrichtung derart, vorzugsweise in einer erhöhten Position, angeordnet und eingerichtet ist, den Bereich um das Hindernis (4) herum zu erfassen.

4. Vorrichtung nach Anspruch 3, **dadurch gekennzeichnet, dass** die Vorrichtung ein Detektionssystem aufweist, welches eingerichtet ist, die erfassten Sprossachsen (1) zur Erkennung von Beikraut (4) zu analysieren.

5. Vorrichtung nach einem der Ansprüche 3 bis 4, **dadurch gekennzeichnet, dass** die Vorrichtung ausgeführt ist, den Bereich um das Hindernis (4) in einem lichtkontrollierten Raum zu erfassen.

6. Vorrichtung nach einem der Ansprüche 3 bis 5, **dadurch gekennzeichnet, dass** die Vorrichtung eine Abschirmung (10) aufweist, die ausgeführt ist, sowohl den Bereich um das Hindernis (4), als auch die Sensoreinrichtung optisch abzuschirmen.

7. Vorrichtung nach einem der Ansprüche 3 bis 6, **dadurch gekennzeichnet, dass** die Vorrichtung eine bis auf einen Mindestabstand (9) über den Boden reichende Abschirmung (10) aufweist, welche auf einer Seite in Erfassungsrichtung (7) sowie auf einer Seite entgegen der Erfassungsrichtung (7) je eine Ausnehmung (8) aufweist.

8. Vorrichtung nach Anspruch 7, **dadurch gekennzeichnet, dass** die Ausnehmungen (8) zum Erfassungsbereich, insbesondere zu dem Hindernis (4), in und/oder entgegen der Erfassungsrichtung (7) in einem Abstand angeordnet sind, welcher in etwa der Höhe der Ausnehmung (8) über dem Boden entspricht.

9. Vorrichtung nach einem der Ansprüche 6 bis 8, **dadurch gekennzeichnet, dass** die Abschirmung (10) Antriebsräder (3) oder einen Ketten-/ Raupenantrieb des Fahrzeugs seitlich zumindest teilweise umschließt.

10. Vorrichtung nach einem der Ansprüche 6 bis 9, **dadurch gekennzeichnet, dass** das Fahrzeug innerhalb der Abschirmung (10) eine Beleuchtungseinrichtung aufweist, welche eingerichtet ist eine Beleuchtung innerhalb der Abschirmung (10) in Abhängigkeit von der Intensität einfallenden Restlichts zu regulieren.

11. Vorrichtung nach einem der Ansprüche 6 bis 10, **dadurch gekennzeichnet, dass** die Abschirmung (10) zugleich ein Außengehäuse der Vorrichtung ausbildet.

12. Vorrichtung nach einem der Ansprüche 3 bis 11, **dadurch gekennzeichnet, dass** das Hindernis (4) in einer Höhe über den Boden verstellbar ausgeführt ist.

13. Vorrichtung nach einem der Ansprüche 3 bis 12, **dadurch gekennzeichnet, dass** eine Höhe des Hindernisses (4) über dem Boden adaptiv einstellbar ausgeführt ist, wobei eine Einstellung adaptiv von der Höhe des Hindernisses (4) über dem Boden und/oder einer Wachstumshöhe der Pflanzen erfolgt.

14. Vorrichtung nach einem der Ansprüche 3 bis 13, **dadurch gekennzeichnet, dass** eine Ermittlung eines Abstands des Hindernisses (4) zum Boden sowie die Erfassung eines Bereichs um das Hindernis (4) mit derselben Sensoreinrichtung sowie einer damit verbunden Bildverarbeitungseinrichtung erfolgt.

15. Vorrichtung nach einem der Ansprüche 3 bis 14, **dadurch gekennzeichnet, dass** das Hindernis (4) verschiedene Abschnitte aufweist, welche abschnittsweise unterschiedlich in ihrer Höhe verstellbar sind.

## Claims

1. Method for the particularly automated detection of shoot axes (1), in particular for weed control, wherein an obstacle (4), for example a thin rod, is moved by a vehicle, in particular by an autonomous robot vehicle, preferably transversely and preferably parallel to the ground level over an area covered with plants,
wherein the height of the obstacle (4) above the ground level is selected such that when driving in the detection direction (7), for example in the forward direction, the shoot axes (1) of the plants with their leaves are bent in the detection direction (7), for example forwards, and a sensor device detects an area around the obstacle (4) from a preferably elevated position.

2. Method according to claim 1, **characterized in that** shoot axes (1) detected by the sensor device are analyzed by a detection system for identifying weeds (6).

3. Device for the particularly automated detection of shoot axes (1), wherein the device comprises a vehicle, in particular an autonomous robot vehicle, and a sensor device, wherein the vehicle has an obstacle (4), preferably a thin rod, the height of which above the ground level can be positioned such that when the vehicle moves over an area covered with plants in a detection direction (7), for example in a forward direction, the shoot axes (1) of the plants with their leaves are bent in the detection direction (7), for example forwards, and the sensor device is arranged and configured, preferably in an elevated position, to detect the area around the obstacle (4).

4. Device according to claim 3, **characterized in that** the device has a detection system which is configured to analyze the detected shoot axes (1) for the detection of weeds (6).

5. Device according to one of claims 3 to 4, **characterized in that** the device is configured to detect the area around the obstacle (4) in a light-controlled space.

6. Device according to one of claims 3 to 5, **characterized in that** the device has a shield (10) which is configured to optically shield both the area around the obstacle (4) and the sensor device.

7. Device according to one of claims 3 to 6, **characterized in that** the device has a shield (10) extending above the ground to a minimum distance (9), which shield has a recess (8) on one side in the detection direction (7) and on one side opposite the detection direction (7).

8. Device according to claim 7, **characterized in that** the recesses (8) are arranged at a distance from the detection area, in particular from the obstacle (4), in and/or against the detection direction (7) which corresponds approximately to the height of the recess (8) above the ground.

9. Device according to one of claims 6 to 8, **characterized in that** the shield (10) at least partially encloses drive wheels (3) or a chain/crawler drive of the vehicle laterally.

10. Device according to one of claims 6 to 9, **characterized in that** the vehicle has a lighting device within the shield (10) which is configured to regulate lighting within the shield (10) as a function of the intensity of incident residual light.

11. Device according to one of claims 6 to 10, **characterized in that** the shield (10) simultaneously forms an outer housing of the device.

12. Device according to one of claims 3 to 11, **characterized in that** the obstacle (4) is configured to be adjustable at a height above the ground.

13. Device according to one of claims 3 to 12, **characterized in that** a height of the obstacle (4) above the ground is adaptively adjustable, wherein an adjustment is made adaptively from the height of the obstacle (4) above the ground and/or a growth height of the plants.

14. Device according to one of claims 3 to 13, **characterized in that** a determination of a distance of the obstacle (4) to the ground and the detection of an area around the obstacle (4) are carried out with the same sensor device and an image processing device connected thereto.

15. Device according to one of claims 3 to 14, **characterized in that** the obstacle (4) has different sections which can be adjusted to different heights in certain sections.

## Revendications

1. Procédé de détection particulièrement automatisée d'axes de pousses (1), notamment pour le désherbage, dans lequel un obstacle (4), par exemple une tige fine, est déplacé par un véhicule, notamment par un véhicule robot autonome, de préférence transversalement et de préférence parallèlement au plan du sol sur une surface recouverte de plantes, dans lequel la hauteur de l'obstacle (4) au-dessus du niveau du sol est choisi de telle sorte que lors du déplacement dans la direction de détection (7), par exemple en direction vers l'avant, les axes des pousses (1) des plantes avec leurs feuilles soient courbés dans la direction de détection (7), par exemple vers l'avant, et un dispositif de capteur détecte une zone autour de l'obstacle (4) à partir d'une position de préférence rehausée.

2. Procédé selon la revendication 1, **caractérisé en ce que** les axes de pousses (1) détectés par le dispositif capteur sont analysés par un système de détection pour identifier les mauvaises herbes (6).

3. Dispositif de détection particulièrement automatisée d'axes de pousses (1), le dispositif comprenant un véhicule, en particulier un véhicule robot autonome, et un dispositif capteur, dans lequel le véhicule comporte un obstacle (4), de préférence un poteau mince, dont la hauteur au-dessus du niveau du sol peut être positionnée de telle sorte que lorsque le véhicule se déplace sur une zone couverte de plantes dans une direction de détection (7), par exemple vers l'avant, les axes de pousse (1) des plantes avec leurs feuilles sont courbés dans la direction de détection (7), par exemple vers l'avant, et le dispositif capteur est disposé et configuré, de préférence dans une position surélevée, pour détecter la zone autour de l'obstacle (4).

4. Dispositif selon la revendication 3, **caractérisé en ce que** le dispositif comporte un système de détection qui est conçu pour analyser les axes de pousse détectés (1) pour la détection des mauvaises herbes (6).

5. Dispositif selon l'une des revendications 3 à 4, **caractérisé en ce que** le dispositif est conçu pour détecter la zone autour de l'obstacle (4) dans un espace contrôlé par la lumière.

6. Dispositif selon l'une des revendications 3 à 5, **caractérisé en ce que** le dispositif comporte un blindage (10) qui est conçu pour protéger optiquement à la fois la zone autour de l'obstacle (4) et le dispositif capteur.

7. Dispositif selon l'une des revendications 3 à 6, **caractérisé en ce que** le dispositif comporte un blindage (10) s'étendant au-dessus du sol jusqu'à une distance minimale (9), lequel blindage comporte un évidement (8) sur un côté dans la direction de détection (7) et sur un côté opposé à la direction de détection (7).

8. Dispositif selon la revendication 7, **caractérisé en ce que** les évidements (8) sont disposés à une distance de la zone de détection, notamment de l'obstacle (4), dans et/ou contre la direction de détection (7) qui correspond approximativement à la hauteur de l'évidement (8) au-dessus du sol.

9. Dispositif selon l'une des revendications 6 à 8, **caractérisé en ce que** le blindage (10) entoure au moins partiellement latéralement les roues motrices (3) ou une transmission par chaîne/chenille du véhicule.

10. Dispositif selon l'une des revendications 6 à 9, **caractérisé en ce que** le véhicule comporte un dispositif d'éclairage à l'intérieur du blindage (10) qui est conçu pour réguler l'éclairage à l'intérieur du blindage (10) en fonction de l'intensité de la lumière résiduelle incidente.

11. Dispositif selon l'une des revendications 6 à 10, **caractérisé en ce que** le blindage (10) forme simultanément un boîtier extérieur du dispositif.

12. Dispositif selon l'une des revendications 3 à 11, **caractérisé en ce que** l'obstacle (4) est conçu pour être réglable en hauteur au-dessus du sol.

13. Dispositif selon l'une des revendications 3 à 12, **caractérisé en ce qu'**une hauteur de l'obstacle (4) au-dessus du sol est réglable de manière adaptative, un réglage étant effectué de manière adaptative à partir de la hauteur de l'obstacle (4) au-dessus du sol et/ou d'une hauteur de croissance des plantes.

14. Dispositif selon l'une des revendications 3 à 13, **caractérisé en ce qu'**une détermination d'une distance de l'obstacle (4) au sol et la détection d'une zone autour de l'obstacle (4) sont effectuées avec le même dispositif capteur et un dispositif de traitement d'image qui lui est connecté.

15. Dispositif selon l'une des revendications 3 à 14, **caractérisé en ce que** l'obstacle (4) présente différentes sections qui peuvent être réglées à différentes hauteurs dans certaines sections
